# EUROPEAN PATENT SPECIFICATION

(11) **EP 3 277 528 B1**
(45) Date of publication and mention of the grant of the patent: **04.09.2024**
(21) Application number: 15886708.5
(22) Date of filing: 01.12.2015
(51) Int. Cl.: B60D 1/54, B60D 1/02, B60D 1/167

(54) **TOWING ASSEMBLY WITH PIVOT JOINTS**
ABSCHLEPPANORDNUNG MIT DREHGELENKEN
ENSEMBLE DE REMORQUAGE À ARTICULATIONS PIVOTANTES

(30) Priority: 24.03.2015 US 201514666740; 24.03.2015 US 201514666722
(43) Date of publication of application: 07.02.2018
(73) Proprietor: Defense Products and Services Group Holding Company, Fredericksburg, VA 22406 (US)
(72) Inventor: FINCHER, Charles, Kennith, Fredericksburg, VA 22406 (US)
(74) Representative: Aulich, Martin
(86) International application number: PCT/US2015/063135
(87) International publication number: WO 2016/153563

(56) References cited:
- DE-A1- 3 512 773
- US-A- 4 869 521
- US-A- 5 000 473
- US-A- 5 346 243
- US-A- 5 765 851
- US-A1- 2008 116 661
- US-A1- 2012 248 737
- US-A1- 2012 248 737

## Description

### BACKGROUND OF THE INVENTION

### Field of the Invention.

The present invention generally relates to a towing assembly or tow bar, and more specifically to a towing assembly that is convertible from an articulating assembly for more easily extracting a vehicle from a less accessible location to a rigid assembly for more safely towing a vehicle on a road.

### Description of the Related Art.

Assemblies for towing vehicles require many, often competing functions. As in many designs, in order to maximize the functionality of one operation there is often a concomitant reduction in the functionality of another operation. For example, in order to extract vehicles from a less accessible location, such as a ditch, it is preferable to have a supple and/or flexible assembly to reach the ditched vehicle. Such assemblies are often woven fabric, multi-strand cable, or other substantially tensile structures. However, after extraction, when towing the vehicle on a road, it is preferable to have a rigid assembly to more securely affix the towed vehicle to the towing vehicle. Such assemblies are often of rigid, and preferably triangular, shape. However, such rigid assemblies, although safer for towing on the road, are of far less use in the extraction process. There is therefore a great need in the art for a towing assembly that can both reach difficult locations and still safely tow the extracted vehicle. Known documents of the prior art for example US 2012/248737 A1, DE 35 12 773 A1 or US 5 000 473 A.

### BRIEF SUMMARY OF THE INVENTION

The invention concerns a towing assembly as set out in claim 1 and the dependent claims 2 to 7.

Additional objects of the present invention will become apparent from the following description. The apparatus of the present invention will be better understood by reference to the following detailed description of preferred embodiments and the attached figures which illustrate and exemplify such embodiments.

### BRIEF DESCRIPTION OF THE DRAWINGS

Specific illustrative embodiments of the present invention will be described with reference to the following drawings, wherein:
FIG. 1 is a top view of a first embodiment of the towing assembly in its extended position.
FIG. 2 is an exploded view of a first embodiment of the towing assembly in its extended position.
FIG. 3A is a top view of a first embodiment of the towing assembly in a first partially unfolded position
FIG. 3B is a top view of a first embodiment of the towing assembly in a second partially unfolded position.
FIG. 3C is a top view of a second embodiment of the towing assembly in a locked, unfolded position
FIG. 3D is a top view of a second embodiment of the towing assembly in a partially unfolded position.
FIG. 4A is a top view of a third embodiment of the towing assembly in a partially folded position.
FIG. 4B is a top view of a fourth embodiment of the towing assembly in a partially folded position.
FIG. 4C is a top view of a fifth embodiment of the towing assembly in a partially folded position.
FIG. 5 is a magnified cut-away view of the towing assembly of FIG. 1A exposing the interior of the first shaft as the first shaft is detachably and pivotally coupled to the third shaft, illustrating a locking mechanism in a locked position.
FIG. 6 is a magnified cut-away view of the towing assembly of FIG. 5 exposing the interior of the first shaft as the first shaft is detachably and pivotally coupled to the third shaft and in a first position, illustrating a locking mechanism in an unlocked position.
FIG. 7 is a magnified cut-away view of the towing assembly of FIG. 5 exposing the interior of the first shaft as the first shaft is detachably and pivotally coupled to the third shaft and in a second position, illustrating a locking mechanism in an unlocked position.
FIG. 8 is a magnified cut-away view of the towing assembly of FIG. 5 exposing the interior of the first shaft as the first shaft is detachably and pivotally coupled to the third shaft and in a third position, illustrating a locking mechanism in a locked position.
FIG. 9A is a first magnified sectional view of a towing assembly of FIG. 1 exposing the interior of the first shaft as the first shaft is detachably and pivotally coupled to the third shaft at a slotted joint, illustrating a powered locking mechanism in an unlocked position.
FIG. 9B is a second magnified sectional view of the towing assembly of FIG. 1 exposing the interior of the first shaft as the first shaft is detachably and pivotally coupled to the third shaft at a slotted joint, illustrating a powered locking mechanism in a locked position.
FIG. 10 is perspective view of the towing assembly of FIG. 1 attached to the front portion of a tank.
FIG. 11 is an exploded view of a sixth embodiment of the towing assembly comprising C-channel connector elbows in its extended position.

### DETAILED DESCRIPTION OF PREFERRED EMBODIMENTS

The following preferred embodiments as exemplified by the drawings are illustrative of the invention and are not intended to limit the invention as encompassed by the claims of this application.

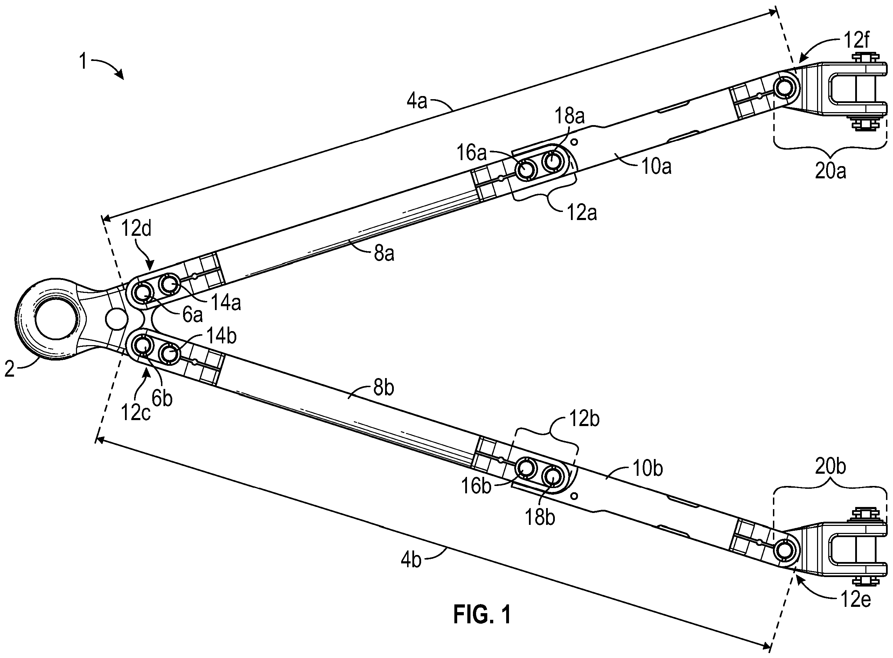

The towing assembly 1, as illustrated generally in FIGS. 1-4, in one preferred embodiment, can be used for attaching two vehicles to each other, such as for example extracting an immobilized vehicle and then towing it. The towing assembly 1 preferably is made of steel or other high strength material(s), of either solid or hollow elements. The towing assembly comprises a hitch 2, also referred in the industry as a lunette, and a pair of two-piece members 4a, 4b. The hitch 2 is typically of a toroidal shape for engagement with a pintle hook or tow ball (not shown) attached to a towing vehicle. The hitch may be of a variety of types for such engagement, as is known to those of ordinary skill in the art. Attached to the hitch 2 are the two members 4a, 4b. Members 4a, 4b are each pivotally attached to the hitch 2 by a pin 6a, 6b, respectively. In one embodiment, the pin 6a, 6b pivotally attaching the members 4a, 4b to the hitch 2 is a threaded bolt having a nut to secure it. In other embodiments, the pin 6a, 6b may be a cotter pin or a bolt threaded into the hitch 2 itself. In still other embodiments, a spring loaded detent mechanism may be used. Multiple types of attachments may be used to pivotally attach the members 4a, 4b to the hitch 2.

The two members 4a, 4b are preferably symmetrical with each other and accordingly member 4a has two shafts 8a, 10a with a joint 12a therebetween and member 4b has two shafts 8b, 10b with a joint 12b therebetween. It is the shafts 8a, 8b of members 4a, 4b, respectively that are pivotally attached to the hitch 2. The orientation of the attachment of the members 4a, 4b to the hitch 2 may be fixed in place by a locking mechanism 14a, 14b, respectively. In one embodiment, the locking mechanism 14a, 14b fixing the orientation of the members 4a, 4b to the hitch 2 is a threaded bolt having a nut to secure it. In other embodiments, the locking mechanism 14a, 14b may be a cotter pin or a bolt threaded into the hitch 2 itself. In still other embodiments, a spring loaded detent mechanism may be used. In still other embodiments, the locking mechanism 14a, 14b and the joint 12a, 12b upon which it acts may be configured for a specialized automatic/automated locking mechanism. Multiple types of locking mechanisms 14a, 14b, automated locking mechanisms, and automated operating mechanisms may be used to lock the orientation of the members 4a, 4b to the hitch 2 and to manipulate components of the towing assembly 1.

Each of the two sets of shafts 8a, 10a and 8b, 10b of each of the members 4a, 4b are attached to one another by the joint 12a, 12b, respectively. The joints 12a, 12b also may be used to lock the orientation of each of the respective shafts 8a, 10a and 8b, 10b in an aligned position. In one embodiment, the locking joints 12a, 12b fixing the orientation of the shafts 8a, 10a and 8b, 10b to each other each have pins 16a, 18a and 16b, 18b. In other embodiments, the pins 16a, 16b and 18a, 18b may be threaded bolts each having a nut to secure it. In yet other embodiments, the locking mechanism may be a cotter pin or a bolt threaded into the joint itself. In still other embodiments, a spring loaded detent mechanism may be used. Multiple types of locking mechanisms may be used to lock the orientation of the shafts 8a, 10a and 8b, 10b relative to each other.

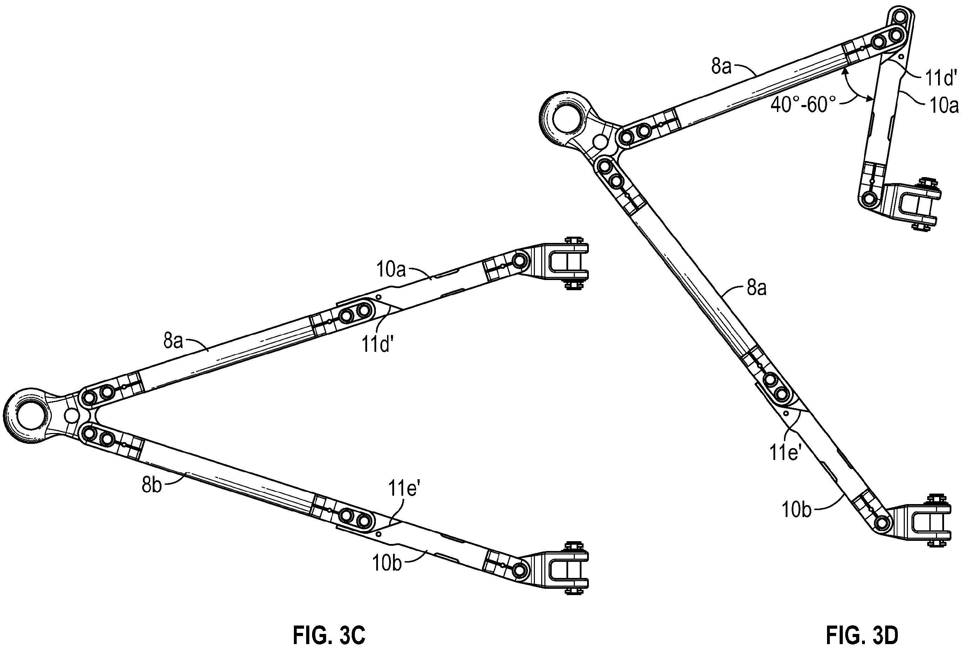

Ends of the shafts 10a, 10b, for example, may have at least one shoulder 11a, 11b, 11c, 11d, 11d', 11e'structure. Shoulders 11a, Hbmaypreventthealigned shafts 8a, 10a, 8b, 10b from rotating past an aligned position from a folded position. Similarly, shoulders 11c, 11 d may prevent shafts 8a, 10a, 8b, 10b from folding beyond a certain angle relative to each other. Although an angle of approximately 65 degrees is shown, this is for illustrative purposes. Shoulders 11a, 11b, 11c, 11d, 11d', 11 e' extend somewhat upwards or away from shafts 10a, 10b whereby a portion of shafts 8a, 8b can contact shoulders 11a, 11b, 11c, 11d, 11d', 11 e' thereby preventing shafts 8a, 8b from rotating about joint 12a, 12b relative to shafts 10a, 10b, more than a set distance. In this manner, shafts 8a, 8b can be forced to align with shafts 10a, 10b in a linear manner. In an alternative embodiment, and with reference to FIG. 3C and FIG. 3D, Shoulders 11d', 11 e' may allow shafts 8a, 10a and 8b, 10b to fold more than about 65 degrees relative to each other. Such an alternative embodiment increases the range of articulation of the assembly.

The aligned position, specifically shown in FIG. 1, allows the towing assembly 1 to form a substantially equilateral or isosceles triangle when the towing assembly 1 is in its extended position. Typically, this aligned position may be achieved when tensile force is substantially equally applied to each pair of shafts 8a, 10a and 8b, 10b of each pair of members 4a, 4b.

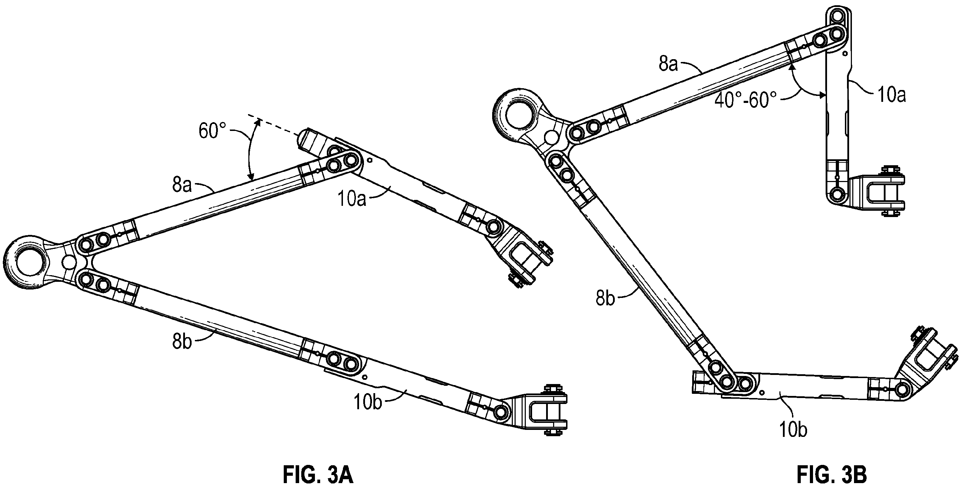

When each of the pins 14a, 14b, 16a, 16b are disengaged from their respective joints 12d, 12c, 12b, 12a, the towing assembly 1 may articulate from its extended aligned position through intermediate positions illustrated in FIG. 3A and FIG. 3B, to a folded position. When the towing assembly 1 is in a fully folded position, each pair of shafts 8a, 10a and 8b, 10b of each member 4a, 4b preferably is substantially parallel to each other.

Attached to the end of shafts 10a, 10b opposite joints 12a, 12b, are attaching mechanisms 20a, 20b for attachment to a vehicle to be towed. Many types of such mechanisms 20a, 20b may be used, for example, shackles, eye bolts, or universal joints, as is well known to those skilled in the art.

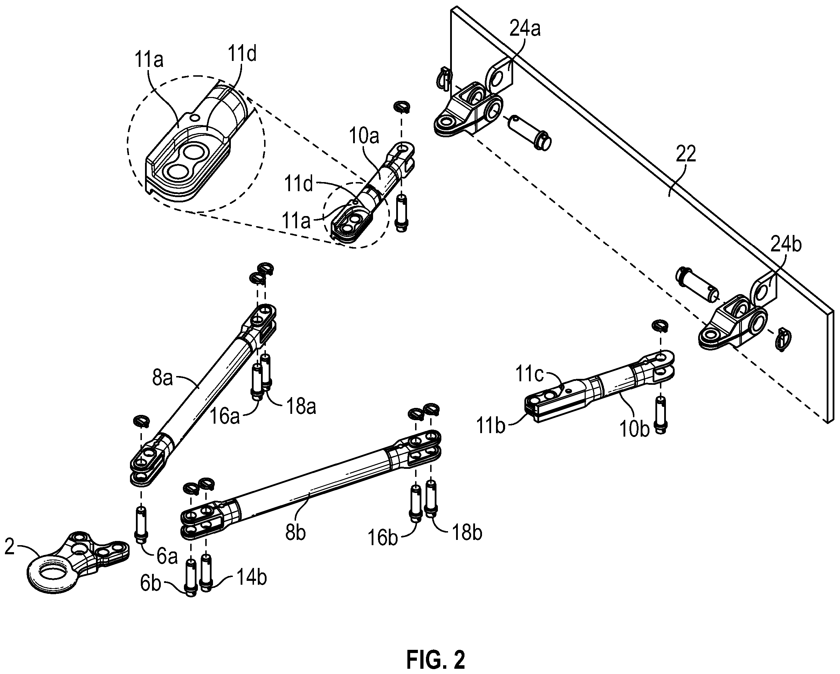

FIG. 2 depicts the towing assembly 1 attached to a bumper 22 of a vehicle to be towed. As shown, the bumper 22 has two attaching devices 24a, 24b for mating with the attaching mechanisms 20a, 20b, respectively. Until the locking pins 14a, 14b, 16a, 16b, 18a, 18b are in engagement with their respective joints 12a, 12b, 12c, 12d, the towing assembly 1 may articulate for ease of attachment to an otherwise inaccessible vehicle.

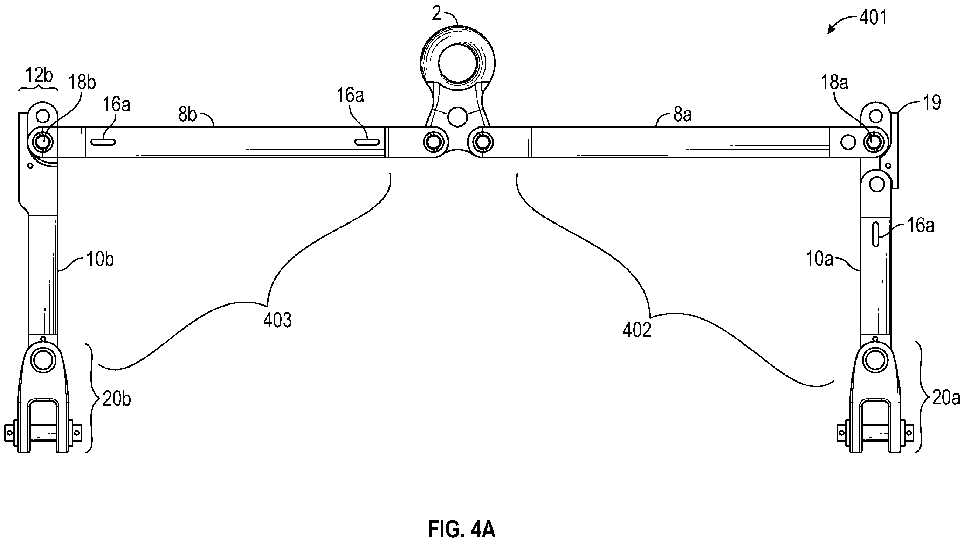

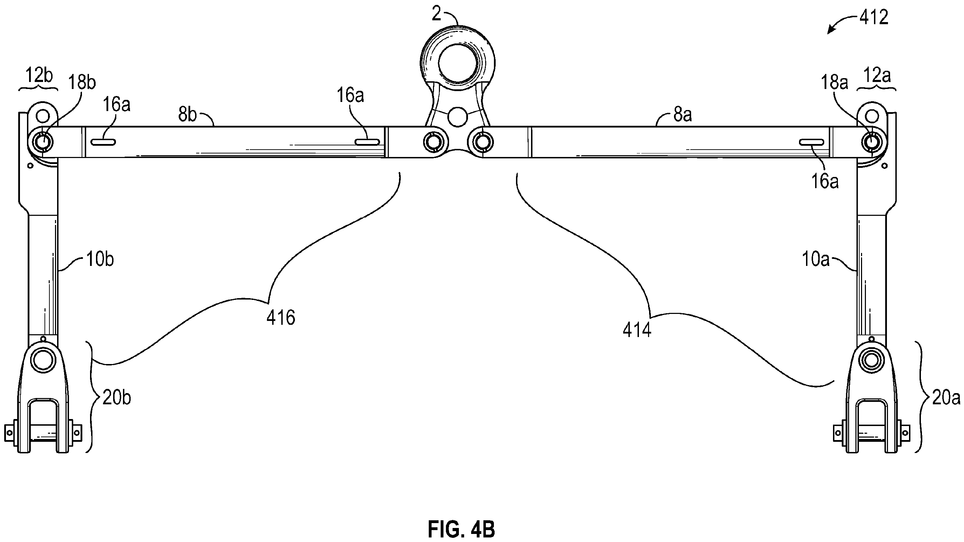

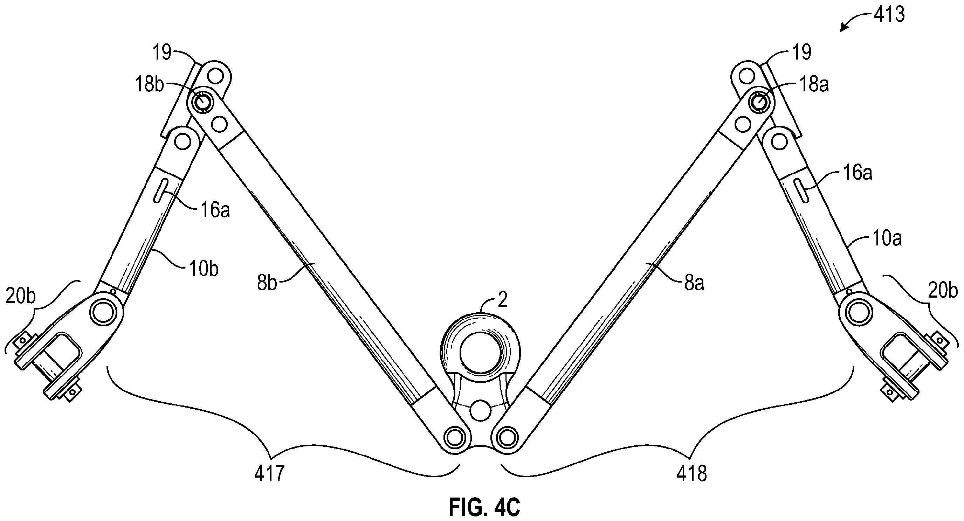

FIGS. 2, 4A, 4B, 4C depict the towing assembly 1 that may be attached to a bumper 22 of a vehicle, in various folded positions. In these embodiments, the bumper of the vehicle to which the towing assembly 1 is attached is the towing vehicle. Accordingly, when not in use, it is preferable to have the towing assembly 1 in its folded position. In this embodiment, it is the hitch 2 that is used to attach to the vehicle to be towed.

Thus, although made of rigid components, via joints 12a, 12b, 12c, 12d, 12e, 12f, the towing assembly 1 can articulate through a wide range of motion. This allows attachment to a vehicle when the vehicle is in a difficult position for access. For example, when extricating a ditched vehicle, a towing vehicle can be maneuvered close to the ditched vehicle, and the towing assembly 1 articulated so as to be able to be attached to the ditched vehicle, preferably by a hitch 2. Then, after the ditched vehicle has been extracted from its immobilized position, the towing assembly 1 can be moved from its articulated position (e.g., FIG. 3B) to its fully extended position (FIG. 1). Having moved into its fully extended, substantially equilateral or isosceles triangular configuration (FIG. 1), all of the shafts 8a, 10a, 8b, 10b can be locked into their respective locking joints 12a, 12b so that the towed vehicle can be more safely towed along a thoroughfare.

In a third embodiment, and as generally shown in FIG. 4A, a towing assembly 401 includes member 402 comprising shaft 8a and shaft 10a joined by joint 12a, at elbow 19 and, member 403 comprising shaft 8b and shaft 10b joined by joint 12b, which joint 12b includes locking mechanism 16a. In this embodiment, shaft 10a includes locking mechanism 16a that locks elbow 19 in line with shaft 10a. Elbow 19 is a separate structure pivotally connected to and between shaft 8a and shaft 10a. As shown, shaft 8b includes locking mechanism 16a that locks shaft 8b to shaft 10b. In an optional variation of the third embodiment, shaft 8b and/or shaft 8a may be joined to lunette 2 by locking mechanism 16a. The various locking mechanisms 16 can be included with or excluded from, each of the shafts 8a, 8b, 10a, 10b, and joints 12a, 12b, with, or without elbows 19.

In a fourth embodiment, and as generally illustrated in FIG. 4B, which is most similar to the embodiment of FIGS. 1-3, towing assembly 412 includes member 416 comprising shaft 8b and shaft 10b joined by joint 12b, which joint 12b includes locking mechanism 16a, and member 414 comprising shaft 8a and shaft 10 joined by joint 12a. As shown, shafts 8a, 8b include locking mechanisms 16a that lock shafts 8a and 10a relative to each other, and 8b, 10b, relative to each other, respectively. In an optional variation of the fourth embodiment, shaft 8b and/or shaft 8a may be joined to lunette 2 by locking mechanism 16a. The various locking mechanisms 16 can be included with or excluded from, each of the shafts 8a, 8b, 10a, 10b, and joints 12a, 12b.

In a fifth embodiment, and as generally illustrated in FIG. 4C, towing assembly 413 includes member 417 comprising shaft 8b and shaft 10b joined by elbow 19, which elbow 19 receives locking mechanism 16a on leg 10b, and member 418 comprising shaft 8a and shaft 10a joined by elbow 19, which elbow 19 receives locking mechanism 16a on shaft 10a. In an optional variation of the fifth embodiment, shaft 8b and/or shaft 8a may be joined to lunette 2 by locking mechanism 16a. The various locking mechanism 16 can be included with or excluded from, each of the shafts 8a, 8b, 10a, 10b, joints 12a, 12b, and/or elbows 19.

Shafts 8a, 10a, 8b, 10b, may be joined to each other by a joint 12a, 12b, respectively, a two-hole, three-hole, or four-hole elbow 19, and/or a locking mechanism 16a, 16b, respectively. The locking mechanisms 16 may be mixed and matched as desired.

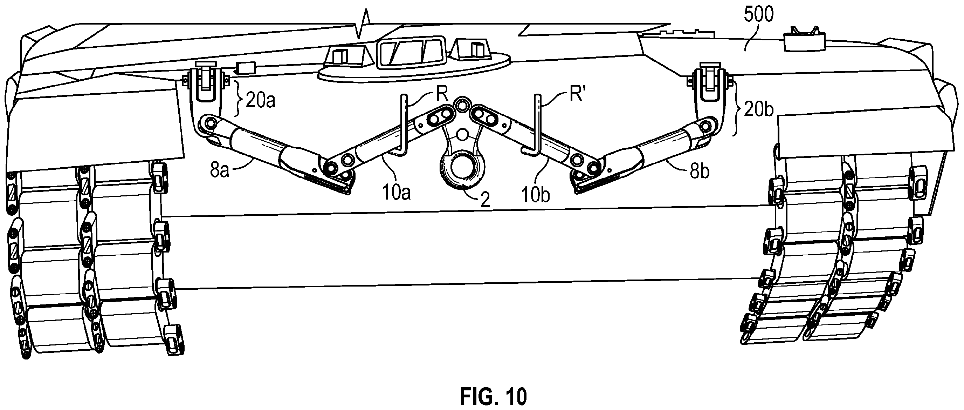

In another embodiment, and as generally illustrated in FIG. 10, the towing assembly may be attached to a tank 500. Shafts 8a, 8b may be tethered at one end to attachment mechanisms 20a and 20b, respectively. Shafts 10a, 10b are attached at one end to shafts 8a, 8b, respectively, and shafts 10a, 10b are connected at an opposite end to lunette 2. In an exemplary embodiment, the articulating shafts 10a, 10b are supported by brackets R and R' such that the towing assembly is not damaged by tank action.

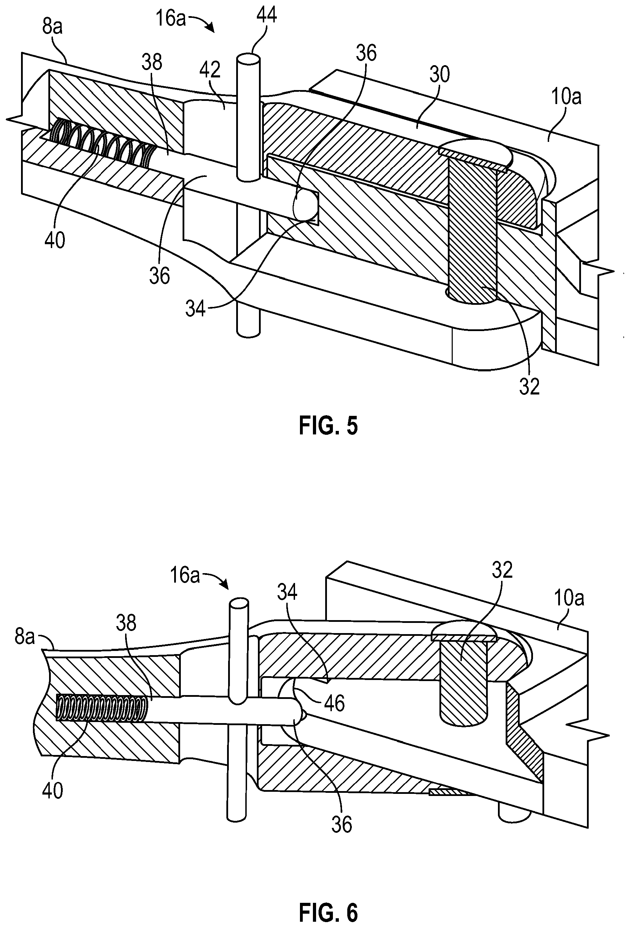

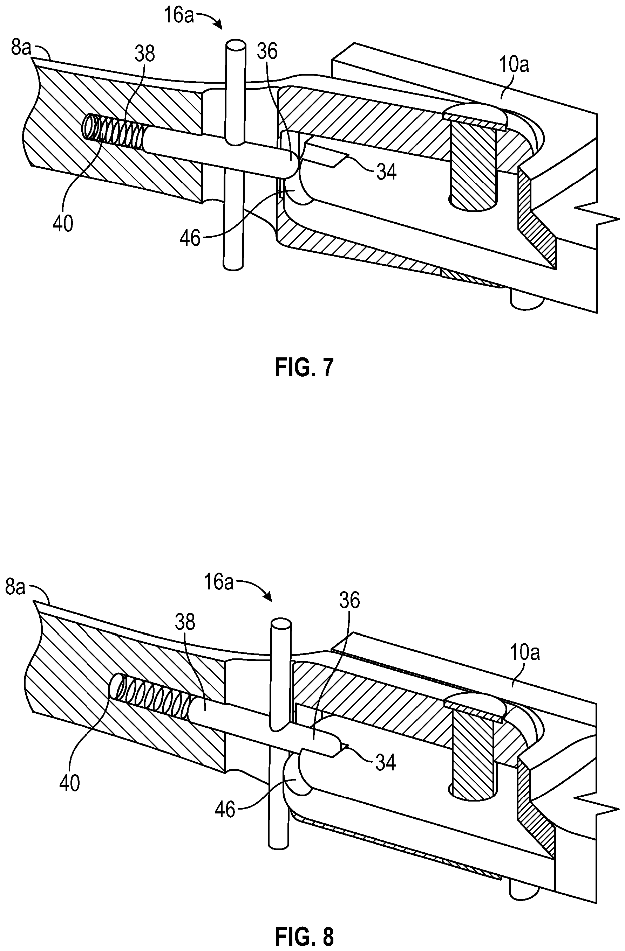

FIG. 5 depicts a second embodiment of the locking mechanism 16a, and a second embodiment of the joint 12a of assembly for towing 1. These embodiments of the locking mechanism 16a, and the joint 12a are configured for automatic locking (i.e., engagement with the joint 12a) whenever the corresponding and associated shafts 8a, 10a of the member 4a are aligned and relative one another (as is best seen in FIG. 1A and FIG. 8). This results in the corresponding and associated shafts 8a, 10a of the member 4a being held fixed in their relative alignment unless the locking mechanism 16a, is directly and/or remotely disengaged.

More specifically, FIG. 5 depicts a magnified cut-away view of the interior of shaft 8a of member 4a with a clevis termination 30 as it is detachably and pivotally coupled to the joint 12a by a pin 32. In one embodiment, the pin 32 is a threaded bolt having a nut/cap to secure it (as is depicted in FIG. 5). In other embodiments, the pin 32 may be a cotter pin or a bolt threaded into the joint itself. In still other embodiments, a spring loaded detent mechanism may be involved with the pin 32. In still other embodiments, the pin 32 may be a clevis pin having a clevis tang. Multiple types of the pin 32 may be used to detachably and pivotally couple the shaft 8a to the elbow joint 12a, as is well known to those skilled in the art.

The embodiment of the locking mechanism 16a shown in FIG. 5 is engaged with the joint 12a via a socket 34. The socket 34 is configured to receive and securely hold at least a portion of the locking mechanism 16a such that, when the locking mechanism 16a is engaged, the shaft 8a is held fixed in its alignment relative to the joint 12a. Although FIG. 5 depicts the socket 34 as a single relatively shallow cavity defined by the joint 12a, one of ordinary skill in the art understands that the socket 34 may involve more complex geometric/mechanical configurations.

The locking mechanism 16a of FIG. 5 engages with the socket 34 of the joint 12a via a bolt 36 that automatically, and retractably, extends out of the clevis termination 34 of the shaft 8a. More specifically, the automatic extension and retractable extension functions of bolt 36 are facilitated by a barrel 38, which holds and guides the bolt 36 as it extends or retracts, and a spring mechanism 40, which forces the bolt 36 to its fully extended position when the bolt 36 aligns with the socket 34. More specifically, the spring mechanism 40 is compressed during retraction of the bolt 36 into the barrel 38, and the spring mechanism 40 is uncompressed during the extension of the bolt 34 into the socket 34. Although FIG. 5 depicts the bolt 36 as a single cylindrical extension with a rounded tip, the bolt 36 may involve more complex geometric/mechanical configurations. If this is the case, then the socket 34 complements the bolt 36 such that the socket 34 remains mechanically operable.

At the junction between the clevis termination 30 and the shaft 8a is an aperture 42. The barrel 38 accesses the aperture 42 such that the bolt 36 extends across the aperture 42, preferably relative to the length of the aperture 42, for reception into the socket 34. A handle 44 is attached to the bolt 36, and the handle 44 projects perpendicularly from the bolt 34 through the aperture 42, such that at least a portion of the handle 44 extends out of the aperture 42 and is accessible from outside of the joint 12a, whereby a user can manipulate the handle 44 and thus the bolt 34. The aperture 42 defines a sufficient space to allow the handle 44 to be moved backwards towards the shaft 8a such that the bolt 36 may be disengaged from the socket 34, and forced deeper into the barrel 38, thus compressing the spring mechanism 40. As disengaging the bolt 36 from the socket 34 requires retraction of the bolt 36 into the barrel 38, the locking mechanism 16a is configured to automatically reengage with the socket 34, such as, for example, via the decompressing spring mechanism 40, whenever the shaft 8a is appropriately aligned with the joint 12a and the handle 44 is not receiving a disengaging force. In other words, the spring mechanism 40 forces the bolt 36 into the socket 34 when the bolt 36 aligns with the socket 34.

Although FIG. 5 depicts the aperture 42 as generally oval in shape, and proximate to the junction between the clevis termination 30 and the shaft 8a, aperture 42 and/or the handle 44 may involve more complex geometric/mechanical configurations. Moreover, the aperture 42 may be positioned on the shaft 8a, accordingly, based on the specific configuration/complexity of the locking mechanism 16a being employed.

As shown in FIG. 6, a guide groove 46 can define an elongated recess along the surface of the joint 12a at the junction between the locking mechanism 16a and the joint 12a. More specifically, the guide groove 46 can define an elongated rounded/concave recess complementary of the rounded tip of the bolt 36. The guide groove 46 tapers towards the socket 34 such that a bolt 36 pushing against the guide groove 46 during articulation is guided into and would eventually access the socket 34, allowing the spring mechanism 40 to decompress, and fully extend towards a maximum length, so as to force bolt 36 into socket 34.

Therefore, when the locking mechanism 16a is disengaged from the socket 34, and the shaft 8a is articulating upon the joint 12a, the guide groove 46 is configured to channel the bolt 36 towards and away from the socket 34. Furthermore, the guide groove 46 is configured to minimize the resistance to articulation (e.g., friction) of the shaft 8a upon the joint 12a. Additionally, the guide groove 46 is configured to facilitate the automatic locking function of the locking mechanism 16a when the shaft 8a is appropriately aligned with the joint 12a, whereby the action of the decompressing spring mechanism 40 on the bolt 36 can assist in aligning the shaft 8a with the joint 12a such that the bolt 36 can access the socket 34.

Although FIG. 6 depicts the guide groove 46 as an elongated rounded/concave recess complementary of the rounded tip of the bolt 36, guide groove 46 may involve more complex geometric/mechanical configurations compatible with any other complex components of the towing assembly 1, e.g., multiple bolts 36, elaborate and complex automatic/automated locking mechanisms 16a, differently shaped joints 12a, differently terminated shafts 8a.

FIGS. 6-8 depict an embodiment of the articulation range available to the towing assembly 1 of FIG. 1. More specifically, the shaft 8a detachably and pivotally coupled to the joint 12a is shown transitioning from the disengaged position of FIG. 6 through the disengaged position of FIG. 7 to the engaged position of FIG. 8. Moreover, FIGS. 6-8 present cut-away views of the junction between the shaft 8a and the joint 12a as the locking mechanism 16a transitions through the positions.

In the position of FIG. 6 (a first position), the locking mechanism 16a is disengaged from the socket 38. The shaft 8a is articulating upon the joint 12a in a clockwise direction. The bolt 36 is being channeled by the guide groove 46 towards the socket 34. Because the guide groove 46 tapers towards the socket 34, the bolt 36 is pushing against the guide groove 46 as it begins to round the edge towards the socket 34. The bolt 36 is being maintained within the barrel 38, which compresses the spring mechanism 40.

In the position of FIG. 7 (a second position), the locking mechanism 16a is still disengaged from the socket 38; however, the shaft 8a is near appropriate alignment with the joint 12a for the locking mechanism 16a to automatically engage with the socket 34. The shaft 8a is still articulating upon the joint 12a in a clockwise direction. The bolt 36 is still being channeled by the guide groove 46 towards the socket 34. The bolt 36 still is pushing against the guide groove 46 as it begins to round towards the socket 34. The bolt 36 is still being maintained within the barrel 38, which compresses the spring mechanism 40.

In the position of FIG. 8 (a third position), the locking mechanism 16a is engaged with the socket 34 because the shaft 8a is appropriately aligned with socket 34 in the joint 12a. The appropriate alignment has allowed the compressed spring mechanism 40 to decompress, which fully extended the bolt 36 to its maximum position out of the barrel 38 and into the socket 34. Therefore, the locking mechanism 16a has automatically engaged with the socket 34.

The user can manipulate the handle 44 to disengage the bolt 36 from the socket 34 when releasing the locked towing assembly 1. For example, when the towing assembly 1 is in the articulated and locked position, with the shafts 8a and 10a, 8b and 10b aligned and bolt 36 extending into socket 34, spring mechanism maintains the bolt within the socket 34. To unlock the towing assembly 1, the user can pull on the handle 44 in the direction that withdraws the bolt 36 from the socket 34, thus moving the bolt 36 out of the socket 36 and further into the barrel 83, thus compressing the spring mechanism 40. This disengages the bolt 36 from the socket 34 and unlocks the shafts 8a, 8b, 10a, 10b from the joint 12a, 12b, thereby allowing the towing assembly to de-articulate.

A locking mechanism comprising socket 34, bolt 36, barrel 38, spring mechanism 40, aperture 42, handle 44, and guide groove 46 can be incorporated in each part of the towing assembly 1, such as between each of shafts 8 and joints 12, and between each of shafts 10 and joints 12, whereby each of the shafts 8, 10 can be automatically locked to the joints 12. Additionally, locking mechanisms also can be incorporated between each of shafts 8 and hitch 2 whereby each of shafts 8 can be automatically locked to the hitch 2, and between each of shafts 10 and attaching mechanism 22 or attaching devices 24 each of shafts 10 can be automatically locked to the and attaching mechanism 22 or attaching devices 24.

Thus, the first means for fixing an orientation of said first and third shafts 8a, 10a in a locked position relative to each other is a first locking mechanism at least partially situated at the junction between the first shaft 8a and the first pivotable joint 12a, and at least partially embedded within the first shaft 8a; the second means for fixing an orientation of said second and fourth shafts 8b, 10b in a locked position relative to each other is a second locking mechanism at least partially situated at the junction between the second shaft 8b and the second pivotable joint 12b, and at least partially embedded within the second shaft 8b; the first and second shafts 8a, 8b each comprise a clevis termination 30 at the first and second pivotable joints 12a, 12b, respectively; the first and second pivotable joints 12a, 12b each additionally define an aperture 42, the aperture 42 configured to receive a clevis pin 36 traversing the clevis termination 30; the third and fourth shafts 10a, 10b each comprise a socket 34 for receiving the clevis pin 36; and each of the clevis pins 36 is movable from an unlocked position disengaged from the respective socket 34 to a locked position engaged with the respective socket 34.

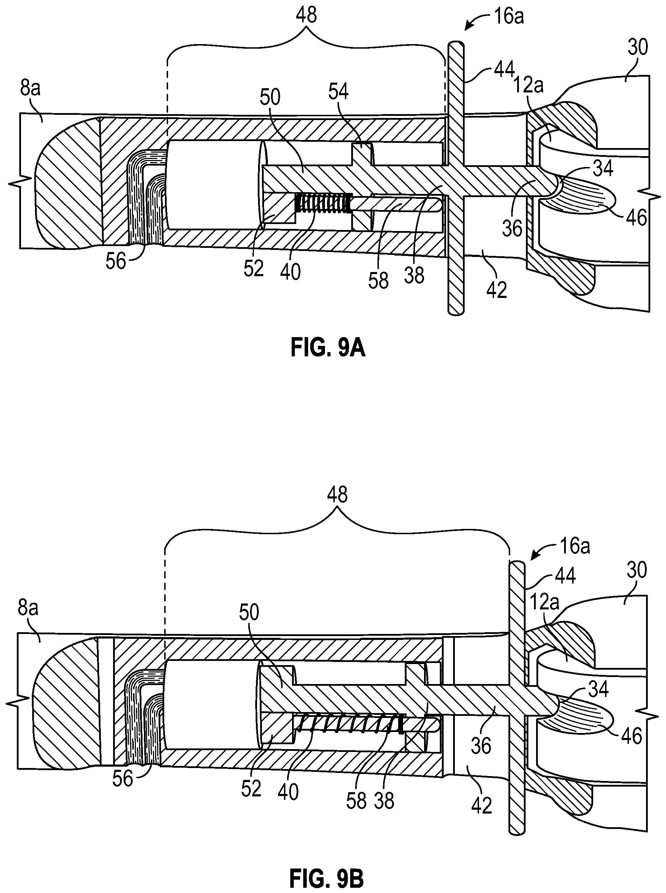

In another embodiment of locking mechanism 16a, FIG. 9A-9B depict a sectional view of the interior of shaft 8a of member 4a with a clevis termination 30 as it is detachably and pivotally coupled to the slotted joint 12a (only partially shown). In FIG. 9A, the bolt 36 of an automated locking mechanism 16a is disengaged from the socket 34 of the slotted joint 12a. In FIG. 9B, the bolt 36 of the automated locking mechanism 16a is engaged with the socket 34 of the slotted joint 12a. At the junction between the clevis termination 30 and the shaft 8a is an aperture 42. A handle 44 projects perpendicularly out from the bolt 36 through the length of the aperture 42, and at least a portion of the handle 44 extends out of the aperture 42. The automated locking mechanism 16a is configured to automatically, and retractably, extend out of the clevis termination 34 of the shaft 8a, as described for FIGS. 1-8. More specifically, the automatic extension and retractable extension functions of bolt 36 are facilitated by a barrel 38, which holds and guides the bolt 36 as it extends or retracts, and a spring mechanism 40, which forces the bolt 36 to its fully extended position whenever the spring mechanism 40 is compressed during retraction of the bolt 36 into the barrel 38.

The barrel 38 of the shaft 8a accesses the aperture 42 such that the bolt 36 may extend across the aperture 42 for reception into the socket 34 of the slotted joint 12a. The first component 50 of the automation mechanism 48 is configured to push/retract the bolt 36 across the aperture 42, that is, to slide the bolt 36 forwards without disturbing the relative position of the second component 52 of the automation mechanism 48, other than the spring mechanism 40 which would decompress.

The sliding block 54 of the automation mechanism 48 is configured to move laterally whenever the bolt 36 of the shaft 8a moves. For example, if the bolt 36 recedes into the barrel 38, then the sliding block 54 recedes with it compressing the spring mechanism 40 behind the sliding block 54. If the bolt 36, however, extends out of the barrel 38, then the sliding block 54 moves forward allowing the spring mechanism 40 to decompress.

Finally, the second component 52 of the automation mechanism 48 comprises an extension 58 holding the spring mechanism 40 behind the sliding block 54. The extension 58 traverses, via a mechanical restriction opening, the sliding block 54. The second component 52 is configured to push/retract the extension 58 through the sliding block 54. FIGS. 9A and 9B illustrate the extension 58 in its fully extended position. Because the sliding block 54 of the automation mechanism 48 allows the second component 52 to displace laterally relative to the first component 50 without disturbing the position of the first component 50, the second component 52 varies the compression of the spring mechanism 40 and, therefore, the spring force acting on the bolt 36. In one embodiment, the second component 52 leverages the spring mechanism 40, as would be understood by one having ordinary skill in the art, such that the second component 52 senses the amount of force acting on the bolt 36 as it articulates about the slotted joint 12a.

The first component 50 and/or the second component 52 of the automation mechanism 48 can be configured for hydraulic and/or electric automation controllable by a remote user. For example, the automation mechanism 48 may have known subcomponents configured for hydraulics, pneumatics, electromotives, Bowden cable mechanisms, mechanical motors/gears/pulleys, solenoids, etc. Of course, the bundle 56 may be of any type, variety or combination to provide the automation mechanism 48 with the necessary electrical, fluid, and/or mechanical power to operate the automation functions.

The automatic locking features disclosed in connection with the locking mechanism 16a and member 4a as drawn in FIGS. 5-9 also can be applied to locking mechanism 16b and member 4b. Similar locking mechanisms can be applied to any or all joints of towing assembly 1.

In use, when a tensile force is applied to said first shaft 8a, said second shaft 8b, said third shaft 10a, and said fourth shaft 10b, said first and said third shafts 8a, 10b are substantially aligned with each other in a linear manner and said second and said fourth shafts 8b, 10b are substantially aligned with each other in a linear manner, whereby the first and third shafts 8a, 10a are locked relative to each other in the linear manner, the second and fourth shafts 8b, 10b are locked relative to each other in the linear manner, the first shaft 8a is locked relative to the lunette 2, and the second shaft 8b is locked relative to the lunette 2.

18.The towing assembly of Claim 17, further comprising an automation subcomponent selected from a group consisting of springs, hydraulics, pneumatics, and electromechanics, the automation subcomponent configured to move the clevis pin from the unlocked position to the locked position and from the locked position to the unlocked position.

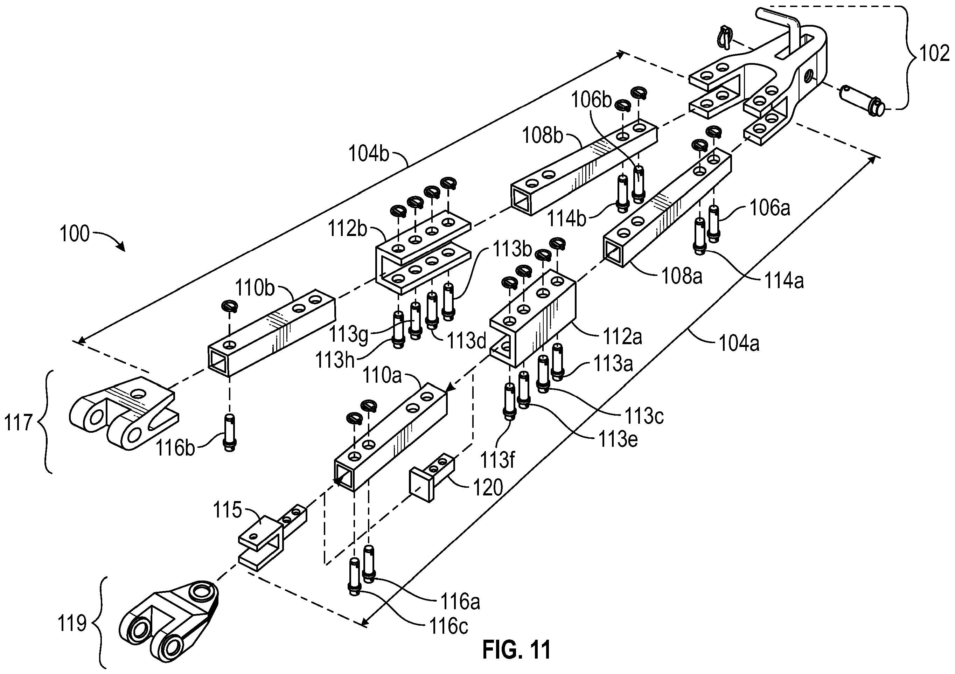

In another embodiment, the assembly for towing 100, as illustrated generally in FIG. 11, is for extracting an immobilized vehicle and then towing it. The towing assembly 100 is preferably made of steel or other high strength material(s), of either solid or hollow elements. The towing assembly comprises a hitch 102, e.g., a ball hitch. Alternatively, the hitch 102 may be of a toroidal shape for engagement with a pintle hook or tow ball (not shown) attached to a towing vehicle. The hitch 102 may be of a variety of types known in the art for such engagement. Attached to the hitch 102 are two members 104a, 104b. Members 104a, 104b are each pivotally attached to the hitch 102a by a pin 106a, 106b, respectively. In one embodiment, the pin 106 pivotally attaching the members 104a, 104b to the hitch 102 is a threaded bolt having a nut to secure it. In other embodiments, the pin 106 may be a cotter pin or a bolt threaded into the hitch 102 itself. In still other embodiments, a spring loaded detent mechanism may be used. Multiple types of attachments may be used to pivotally attach the members 104 to the hitch 102.

The two members 104a, 104b are preferably symmetrical with each other and accordingly member 104a has two shafts 108a, 110a with a joint 112a therebetween and member 104b has two shafts 108b, 110b with a joint 112b therebetween. It is the shafts 108a, 108b of members 104a, 104b, respectively, that are pivotally attached to the hitch 102. The orientation of the attachment of the members 104 to the hitch 102 may be fixed in place by a locking mechanism 114a and 114b, respectively. In one embodiment, the locking mechanism 114 fixing the orientation of the members 104 to the hitch 102 is a threaded bolt having a nut to secure it. In other embodiments, the locking mechanism 114 may be a cotter pin or a bolt threaded into the hitch 102 itself. In still other embodiments, the locking mechanism 114 and the joint 112 upon which it acts may be configured for a specialized automatic/automated locking mechanism. In still other embodiments, an automated mechanism can interact with the members 104a, 104b, and more specifically with the shafts 108a, 110a and 108b, 110b, for operating the towing assembly 100.

Each of the two sets of shafts 108a, 110a and 108b, 110b of each of the members 104a, 104b are attached to one another by the joint 112a, 112b, respectively. Typically referred to as an elbow joint by those skilled in the art, the joints 112a, 112b also may be used to lock the orientation of each of the respective sets of shafts 108a, 110a and 108b, 110b in an aligned position. In one embodiment, the locking joints 112a, 112b fixing the orientation of the shafts 108a, 110a and 108b, 110b to each other each may utilize, e.g., symmetrically spaced pairs of pins 113a, 113b; 113c, 113d; 113e, 113g; and 113f, 113h. In other embodiments, one or more pins 113 may be threaded bolts each having a nut to secure it. In yet other embodiments, the locking mechanism may be a cotter pin or a bolt threaded into the joint itself. Multiple types of locking mechanisms may be used to lock the orientation of the shafts 108a, 110a and 108b, 110b with each other.

The or each of the shafts 108a, 110a, 108b, 110b may be of hollow cross-section, for example, hollow square, hollow rectangle, or hollow circular cross section. Such hollow cross section may reduce the weight of the towing assembly 100, and retain the articulation of the towing assembly 100 as well as its towing capacity. Each shaft 108a, 110a, 108b, 110b may be of hollow cross-section along the entire length of the shaft 108a, 110a, 108b, 110b, or a portion thereof. In another embodiment, plug 120 may be fitted into one or both ends of each shaft 108a, 110a, 108b, 110b in order to reinforce the side walls of shafts 108a, 110a, 108b, 110b. The plug 120 may be manufactured such that the holes of the plug 120 and the pin holes on each shaft 108a, 110a, 108b, 110b are aligned.

In an embodiment, bumper attachment device 117 may be connected to shaft 110a and/or shaft 110b by use of a bolt (e.g., 116b) or other device known to those of skill in the art. Alternatively, connector 115 may be attached to an open end of shaft 110a and/or shaft 110b, and then connected to bumper attachment device 119.

The locking joints may be of C-channel construction, or C-cross-section. In this manner, the vertical member of the C-channel acts as a stop to movement of shafts 108a, 110a, 108b, 110b beyond a linear alignment position.

## Claims

1. A towing assembly (1), comprising:
a) a lunette (2) as a hitch (102);
b) a pair of two-piece members (4a, 4b), each of said members (4a, 4b) comprising
a first shaft (8a, 8b) having a first end and a second end, the first shaft (8a, 8b) pivotally coupled at the first end to the lunette (2) by a pin (6a, 6b);
a second shaft (10a, 10b) having a first end and a second end, the first end of the second shaft (10a, 10b) having a locking joint (12a, 12b) bound by a first shoulder and a second shoulder (11a, 11d; 11b, 11c), the second end of the first shaft (8a, 8b) pivotally coupled, directly, to the locking joint (12a, 12b), wherein the first shoulder (11a, 11b) prevents the aligned first shaft (8a, 8b) and second shaft (10a, 10b) from rotating past an aligned position from a folded position and wherein the second shoulder (11c, 11d) prevents the first shaft (8a, 8b) and second shaft (10a, 10b) from folding beyond a certain angle relative to each other, wherein the locking joint (12a, 12b) comprises locking pins (16a, 18a; 16b, 18b) for fixing the orientation of the shafts (8a, 10a; 8b, 10b) relative to each other;
a first means for fixing an orientation comprising one of the locking pins (16a, 16b) of the first shaft (8a, 8b) relative to the locking joint (12a, 12b), and a second means for fixing an orientation (14a, 14b) of the first shaft (8a, 8b) relative to the lunette (2) as the hitch (102),
whereby the first shaft (8a, 8b) and the second shaft (10a, 10b) are pivotable relative to each other about the locking joint (12a, 12b) in an unlocked position and the first shaft (8a, 8b) and the second shaft (10a, 10b) are not pivotable relative to each other in the locked position; and
c) attaching mechanisms (20a, 20b), each of which is pivotally attached to the second end of the second shaft (10a, 10b).

2. The towing assembly of claim 1, wherein said attaching mechanisms (20a, 20b) are adapted for attaching to a vehicle to be towed.

3. The towing assembly of claim 1, wherein when a tensile force is substantially equally applied to said first shafts (8a, 8b) and said second shaft (10a, 10b), said first shaft (8a, 8b) and said second shaft (10a, 10b) are substantially aligned with each other in a linear manner, whereby the first shaft (8a, 8b) and the second shaft (10a, 10b) are locked relative to each other in the linear manner.

4. The towing assembly of claim 3, wherein said first means for fixing an orientation of said first shaft (8a. 8b) and said second shaft (10a, 10b) in a locked position relative to each other comprises aligning holes at the locking joint (12a, 12b) through each of the first shaft (8a, 8b) and the second shaft (10a, 10b) and a pin through the aligning holes.

5. The towing assembly of claim 4, wherein said locking pins (16a, 16b) are threaded and secured with a nut for use in each of said aligning holes when securing said locking joint (12a, 12b) in the locked position.

6. The towing assembly of Claim 1, wherein:
the first means for fixing an orientation is at least partially situated at a junction between the first shaft (8a, 8b) and the locking joint (12a, 12b), and at least partially embedded within the first shaft (8a, 8b);
the second means for fixing an orientation is at least partially situated at a junction between the first shaft (8a, 8b) and the lunette (2), and at least partially embedded within the first shaft (8a, 8b);
the first shaft (8a, 8b) and the second shaft (10a, 10b) each comprise a clevis termination and;
the locking joint (12a, 12b) additionally define a aperture, the aperture configured to receive a locking pin (16a, 18a; 16b, 18b) traversing the clevis termination.

7. The towing assembly of Claim 6, further comprising an automation subcomponent selected from a group consisting of springs, hydraulics, pneumatics, and electromechanics, the automation subcomponent configured to move the locking pin (16a, 18a; 16b, 18b) from the unlocked position to the locked position and from the locked position to the unlocked position.

## Patentansprüche

1. Abschleppanordnung (1), umfassend:
a) eine Lünette (2) als Anhängerkupplung (102);
b) ein Paar zweiteilige Elemente (4a, 4b), wobei jedes der Elemente (4a, 4b) Folgendes umfasst:
eine erste Welle (8a, 8b) mit einem ersten Ende und einem zweiten Ende, wobei die erste Welle (8a, 8b) am ersten Ende über einen Stift (6a, 6b) mit der Lünette (2) verschwenkbar gekoppelt ist;
eine zweite Welle (10a, 10b) mit einem ersten Ende und einem zweiten Ende, wobei das erste Ende der zweiten Welle (10a, 10b) ein Sperrgelenk (12a, 12b) aufweist, das durch eine erste Schulter und eine zweite Schulter (11a, 11d; 11b, 11c) begrenzt ist, wobei das zweite Ende der ersten Welle (8a, 8b) direkt mit dem Sperrgelenk (12a, 12b) verschwenkbar gekoppelt ist, wobei die erste Schulter (11a, 11b) verhindert, dass sich die ausgerichtete erste Welle (8a, 8b) und zweite Welle (10a, 10b) von einer zusammengeklappten Position an einer Ausrichtungsposition vorbei drehen, und wobei die zweite Schulter (11c, 11d) verhindert, dass sich die erste Welle (8a, 8b) und die zweite Welle (10a, 10b) über einen bestimmten Winkel zueinander hinaus zusammenklappen, wobei das Sperrgelenk (12a, 12b) Sperrstifte (16a, 18a; 16b, 18b) zum Fixieren der Orientierung der Wellen (8a, 10a; 8b, 10b) zueinander umfasst;
eine erste Einrichtung zum Fixieren einer Orientierung, umfassend einen der Sperrstifte (16a, 16b), der ersten Welle (8a, 8b) zum Sperrgelenk (12a, 12b) und eine zweite Einrichtung zum Fixieren einer Orientierung (14a, 14b) der ersten Welle (8a, 8b) zur Lünette (2) als Anhängerkupplung (102),
wobei die erste Welle (8a, 8b) und die zweite Welle (10a, 10b) in einer entsperrten Stellung um das Sperrgelenk (12a, 12b) zueinander verschwenkbar sind und wobei die erste Welle (8a, 8b) und die zweite Welle (10a, 10b) in der gesperrten Stellung zueinander nicht verschwenkbar sind; und
c) Befestigungsmechanismen (20a, 20b), die jeweils am zweiten Ende der zweiten Welle (10a, 10b) verschwenkbar befestigt sind.

2. Abschleppanordnung nach Anspruch 1, wobei die Befestigungsmechanismen (20a, 20b) dazu eingerichtet sind, an einem abzuschleppenden Fahrzeug befestigt zu werden.

3. Abschleppanordnung nach Anspruch 1, wobei, wenn eine Zugkraft im Wesentlichen gleichmäßig auf die ersten Wellen (8a, 8b) und die zweite Welle (10a, 10b) aufgebracht wird, die erste Welle (8a, 8b) und die zweite Welle (10a, 19b) im Wesentlichen miteinander linear ausgerichtet sind, wobei die erste Welle (8a, 8b) und die zweite Welle (10a, 10b) zueinander linear gesperrt sind.

4. Abschleppanordnung nach Anspruch 3, wobei die erste Einrichtung zum Fixieren einer Orientierung der ersten Welle (8a, 8b) und der zweiten Welle (10a, 10b) in einer gesperrten Position zueinander das Ausrichten von Bohrungen am Sperrgelenk (12a, 12b) jeweils durch die erste Welle (8a, 8b) und die zweite Welle (10a, 10b) und eines Stifts durch die Ausrichtungsbohrungen umfasst.

5. Abschleppanordnung nach Anspruch 4, wobei die Sperrstifte (16a, 16b) mit einem Gewinde versehen und beim Sichern des Sperrgelenks (12a, 12b) in der gesperrten Stellung mit einer Mutter zur Verwendung in jeder der Ausrichtungsbohrungen gesichert sind.

6. Abschleppanordnung nach Anspruch 1, wobei:
die erste Einrichtung zum Fixieren einer Orientierung zumindest teilweise an einer Anschlussstelle zwischen der ersten Welle (8a, 8b) und dem Sperrgelenk (12a, 12b) angeordnet ist und zumindest teilweise in die erste Welle (8a, 8b) eingebettet ist;
die zweite Einrichtung zum Fixieren einer Orientierung zumindest teilweise an einer Anschlussstelle zwischen der ersten Welle (8a, 8b) und der Lünette (2) angeordnet ist und zumindest teilweise in die erste Welle (8a, 8b) eingebettet ist;
die erste Welle (8a, 8b) und die zweite Welle (10a, 10b) jeweils ein Gabelende umfassen und
das Sperrgelenk (12a, 12b) zusätzlich eine Öffnung definiert, wobei die Öffnung dazu ausgelegt ist, einen das Gabelende durchlaufenden Sperrstift (16a, 18a; 16b, 18b) aufzunehmen.

7. Abschleppanordnung nach Anspruch 6, ferner umfassend eine Automatisierungsteilkomponente, die aus einer Gruppe bestehend aus Federn, Hydraulik, Pneumatik und Elektromechanik ausgewählt ist, wobei die Automatisierungsteilkomponente dazu ausgelegt ist, den Sperrstift (16a, 18a; 16b, 18b) von der entsperrten Position in die gesperrte Position und von der gesperrten Position in die entsperrte Position zu bewegen.

## Revendications

1. Ensemble de remorquage (1) comprenant :
a) une lunette (2) sous forme d'élément d'attelage (102) ;
b) une paire d'éléments en deux pièces (4a, 4b), chacun desdits éléments (4a, 4b) comprenant
un premier arbre (8a, 8b) ayant une première extrémité et une seconde extrémité, le premier arbre (8a, 8b) étant accouplé de manière pivotante au niveau de la première extrémité à la lunette (2) par une goupille (6a, 6b) ;
un second arbre (10a, 10b) ayant une première extrémité et une seconde extrémité, la première extrémité du second arbre (10a, 10b) ayant une articulation de verrouillage (12a, 12b) délimitée par un premier épaulement et un second épaulement (11a, 11d ; 11b, 11c), la seconde extrémité du premier arbre (8a, 8b) étant accouplée de manière pivotante, directement, à l'articulation de verrouillage (12a, 12b), le premier épaulement (11a, 11b) empêchant le premier arbre (8a, 8b) et le second arbre (10a, 10b) alignés de tourner au-delà d'une position alignée à partir d'une position pliée et le second épaulement (11c, 11d) empêchant le premier arbre (8a, 8b) et le second arbre (10a, 10b) de se plier au-delà d'un certain angle l'un par rapport à l'autre, l'articulation de verrouillage (12a, 12b) comprenant des goupilles de verrouillage (16a, 18a ; 16b, 18b) pour fixer l'orientation des arbres (8a, 10a ; 8b, 10b) l'un par rapport à l'autre ;
un premier moyen pour fixer une orientation comprenant l'une des goupilles de verrouillage (16a, 16b) du premier arbre (8a, 8b) par rapport à l'articulation de verrouillage (12a, 12b), et un second moyen pour fixer une orientation (14a, 14b) du premier arbre (8a, 8b) par rapport à la lunette (2) en tant qu'élément d'attelage (102),
moyennant quoi le premier arbre (8a, 8b) et le second arbre (10a, 10b) peuvent pivoter l'un par rapport à l'autre autour de l'articulation de verrouillage (12a, 12b) dans une position déverrouillée et le premier arbre (8a, 8b) et le second arbre (10a, 10b) ne pouvant pas pivoter l'un par rapport à l'autre dans la position verrouillée ; et
c) des mécanismes de fixation (20a, 20b), dont chacun est fixé de manière pivotante à la seconde extrémité du second arbre (10a, 10b).

2. Ensemble de remorquage selon la revendication 1, lesdits mécanismes de fixation (20a, 20b) étant conçus pour être fixés à un véhicule à remorquer.

3. Ensemble de remorquage selon la revendication 1, lorsqu'une force de tension est appliquée de manière sensiblement égale auxdits premiers arbres (8a, 8b) et audit second arbre (10a, 10b), ledit premier arbre (8a, 8b) et ledit second arbre (10a, 10b) étant sensiblement alignés l'un sur l'autre de manière linéaire, moyennant quoi le premier arbre (8a, 8b) et le second arbre (10a, 10b) sont bloqués l'un par rapport à l'autre de manière linéaire.

4. Ensemble de remorquage selon la revendication 3, ledit premier moyen de fixation d'une orientation dudit premier arbre (8a, 8b) et dudit second arbre (10a, 10b) en position verrouillée l'un par rapport à l'autre comprenant des trous d'alignement au niveau de l'articulation de verrouillage (12a, 12b) à travers chacun du premier arbre (8a, 8b) et du second arbre (10a, 10b) et une goupille à travers les trous d'alignement.

5. Ensemble de remorquage selon la revendication 4, lesdites goupilles de verrouillage (16a, 16b) étant filetées et fixées avec un écrou à utiliser dans chacun desdits trous d'alignement lors de la fixation de ladite articulation de verrouillage (12a, 12b) en position verrouillée.

6. Ensemble de remorquage selon la revendication 1,
le premier moyen de fixation d'une orientation étant au moins partiellement situé au niveau d'une jonction entre le premier arbre (8a, 8b) et l'articulation de verrouillage (12a, 12b), et au moins partiellement encastré dans le premier arbre (8a, 8b) ;
le second moyen de fixation d'une orientation étant au moins partiellement situé au niveau d'une jonction entre le premier arbre (8a, 8b) et la lunette (2), et au moins partiellement encastré dans le premier arbre (8a, 8b) ;
le premier arbre (8a, 8b) et le second arbre (10a, 10b) comprenant chacun une terminaison de chape de réglage et ;
l'articulation de verrouillage (12a, 12b) définissant en outre une ouverture, l'ouverture étant conçue pour recevoir une goupille de verrouillage (16a, 18a ; 16b, 18b) traversant la terminaison de chape de réglage.

7. Ensemble de remorquage selon la revendication 6, comprenant en outre un sous-composant d'automatisation choisi dans un groupe composé de ressorts, d'éléments hydrauliques, d'éléments pneumatiques et d'éléments électromécaniques, le sous-composant d'automatisation étant conçu pour déplacer la goupille de verrouillage (16a, 18a ; 16b, 18b) de la position déverrouillée à la position verrouillée et de la position verrouillée à la position déverrouillée.
